# NEW EUROPEAN PATENT SPECIFICATION

(11) **EP 1 401 924 B2**
(45) Date of publication and mention of the opposition decision: **20.11.2013**
(45) Mention of the grant of the patent: 09.07.2008
(21) Application number: 02739571.4
(22) Date of filing: 31.05.2002
(51) Int. Cl.: C08J 3/20, C08J 3/22, C08K 13/06, C08K 9/00

(54) **ORGANIC/INORGANIC NANOCOMPOSITES OBTAINED BY EXTRUSION**
ORGANISCH/ANORGANISCHE NANOVERBUNDGEGENSTÄNDE ERHÄLTLICH DURCH EXTRUSION
NANOCOMPOSITES ORGANIQUES/INORGANIQUES OBTENUS PAR EXTRUSION

(30) Priority: 31.05.2001 US 294770 P
(43) Date of publication of application: 31.03.2004
(73) Proprietor: Nelson, Gordon L., Melbourne, FL 32934 (US); Yang, Feng, Palm Bay, FL 32905 (US)
(72) Inventor: Nelson, Gordon L., Melbourne, FL 32934 (US); Yang, Feng, Palm Bay, FL 32905 (US)
(74) Representative: Stevens, Fiona
(86) International application number: PCT/US2002/017250
(87) International publication number: WO 2002/096982

(56) References cited:
- WO-A-00/34377
- WO-A-00/34393
- WO-A-01/05880
- DE-A1- 4 041 042
- FR-A- 2 810 987
- JP-A- 63 280 763
- RU-C1- 2 109 772
- SU-A1- 1 305 621
- BALARD ET AL.: 'Study of Modified Silicas by Inverse Gas Chromatography.Part I: Influence of Chain Length on Grafting Ratio.' CHROMATOGRAPHIA vol. 25, no. 8, August 1988, pages 707 - 711
- 'Examples of current achievements and paradigm shifts' NANOTECHNOLOGY RESEARCH DIRECTIONS September 1999, pages 69 - 70
- Product Information Degussa Aerodisp G1220 (G320), September 2006
- Technical Information TI 1206 "Antiblocking Agents", Degussa AG, March 1998

## Description

### Field of the Invention

The subject invention pertains to organic/inorganic nanocomposites and methods for preparing such nanocomposites.

### Background of the Invention

Nanocomposites have received extensive attention in recent years, with applications ranging from mechanical to optical, magnetic and electronic (White J.R. [1994] J Mater Sci 29:584). In general, a nanocomposite can be defined as a combination of two or more phases containing different compositions or structures, one of which is in the nanometer-size range in at least one dimension (Carotenuto, G. [2000] "Nanocomposites," Polymer News 25(8):265-7). These materials exhibit behavior different from conventional composite materials with micro-scale additives, due to the small size of the structural unit and the high surface-to-volume ratio (Ishida, H. et al. [2000] "General Approach to Nanocomposite Preparation," Chem. Mater. 12:1260-67).

The incorporation of a nano-scale additive within a polymer matrix can offer significant improvement of mechanical properties and thermal stability for the resulting nanocomposite. As with other composite materials, the properties of nanocomposites are greatly influenced by the degree of mixing between the phases. In conventionally filled polymers, the constituents are immiscible, resulting in a coarsely blended macrocomposite with chemically distinct phases. This results in poor physical attraction between the organic and inorganic components, leading to agglomeration of the inorganic components, and therefore, weaker materials. In nanocomposites, chemically dissimilar components are combined at the nanometer scale and there are stronger attractions between the polymer and the additive (e.g., silicate clay). The structure and properties of the composite depend on the extent to which the organic and inorganic components are made compatible.

Organic/inorganic nanocomposites can be made from various additives and polymers. Additives can include clay, silica, and/or other metals. Polymers can include polymethyl methacrylate (PMMA), polycarbonate, or polyethylene, for example. Organic/inorganic nanocomposites have been synthesized by several methods. Examples of these methods include the sol-gel process, solution blending, *in-situ* polymerization, intercalation, and melt intercalation or melt blending (Gilman, J.W. et al. [2000] Chem. Mater. 12:1866-73).

Using the sol-gel process, hydrolysis and condensation of a metal alkoxide species such as tetraethylorthosilicate (TEOS) takes place and a network is formed. During build-up of the inorganic network, appropriately functionalized organic (or potentially organic-inorganic) moieties are incorporated that can also undergo the same condensation reaction as the hydrolyzed metal alkoxides. This method can lead to either an alloy-like material, if molecular dispersion is obtained, or a system with a microphase morphology. However, a major disadvantage of the sol-gel process is that the particle size of the final material depends on the concentration of water, pH value, and reaction temperature. In order to obtain a nano-scale inorganic phase, the reaction conditions of the sol-gel process must be well controlled, sometimes involving a vacuum and a sealed system.

The *in-situ* polymerization (or solution polymerization) method involves three continuous steps: modification of additives, dispersion of additives into a monomer solution, and polymerization of the mixture. *In-situ* polymerization can solve the agglomeration problem associated with traditional extrusion. While the productivity of nanocomposites from this method is significantly improved compared with the sol-gel approach, the bulk manufacture of nanocomposites by this method is still unlikely because the productivity by this method cannot meet the demands of industrial production.

The intercalation method is similar to *in-situ* polymerization, but was designed particularly for the preparation of layered clay nanocomposites. Using the intercalation method, a clay additive is modified to create enough space between the clay layers for the diffusion of other molecules (e.g., monomers). However, the distance between clay layers, which is typically about 1-2 nanometers, is not enough for the insertion of other molecules. After modification of the layered clay, a monomer will intercalate between the layers by diffusion, followed by polymerization of the monomer, resulting in a layered nanocomposite with about 3 nm-4 nm space between layers. However, the intercalation method can only be used for the preparation of clay-type nanocomposites, and has all the disadvantages associated with *in-situ* polymerization.

The method of melt intercalation, or melt blending, to prepare organic nanocomposites is generally carried out with clay additives. Only limited nanocomposites can be obtained by this method. The method includes two steps: the treatment of clay material, and the dispersion of clay into a polymer melt. In the second step, a polymer is intercalated between clay layers by diffusion. However, the major problem associated with this method is the intercalation conditions. In most cases, this method requires mixing at relatively high temperature, and/or high shear rates, if a twin-screw mixer or twin extruder are used. High temperature and shear rates can lead to serious thermal and mechanical degradation of the polymer material and the breakage of the clay layers.

Currently, solution blending is the simplest method available for the preparation of organic/inorganic nanocomposites. The solution blending process includes three steps: modification of additives, dispersion of additives in a polymer solution, and film casting. However, solution blending is limited in that materials obtained from this method can only be used as coating materials. Interfacial interaction between the fillers and the polymer matrix is not strong enough for the reinforcement of the mechanical properties in the final materials.

The extrusion of polymer and additives is currently the most productive way to mix these components. Polymer extrusion is the conversion of base polymer material, usually in the form of a powder or pellet, into a finished product or part by forcing it through an opening. The process consists of pumping a molten state polymer (a melt) under pressure, through a die, producing a continuous cross-section or profile. Specifically, the polymer is placed in a hopper connected to the body of the extruder. The polymer is then moved down the barrel of the extruder and mixed by one or more screws turning inside the barrel. An opening in the die is the guide after which the extrudate takes its form. Twin-screw extruders provide improved mixing compared to single screw extruders, because of the higher shear force twin-screw extruders generate. Various operations performed by twin-screw extruders include the polymerizing of new polymers, modifying polymers by graft reactions, devolatilizing, blending different polymers, and compounding particulates into plastics. However, twin-screw extruders are more costly to run and maintain. In addition, the higher shear generated by twin-screw extruders tends to damage the polymer. Likewise, the shear generated by twin-screw extruders will damage the additive, which contributes to degradation of the polymer. By contrast, single-screw extruders are designed to minimize energy input and to maximize pumping uniformity, but are generally inadequate to perform highly dispersive and energy-intensive compounding functions.

If nanocomposites could be produced using an extrusion approach, it would make the bulk production of nanocomposites possible. However, using the traditional extrusion approach to produce nanocomposites is difficult because of agglomeration that occurs between the inorganic phase and the organic phase. This problem is exacerbated by the small size of the nano-scale additives. As the particle size of the additive decreases, the surface area and surface energy will increase dramatically, which means that the particles will tend to agglomerate more easily. Therefore, agglomeration of nano-scale additives will occur if additives and polymer are subjected to extrusion, even when the additives are pretreated with a surface modifier.

This is unfortunate because additives of small particle size can play a very important role in providing various properties, such as tensile strength, to the base polymer. For example, in the case of silica additives, as the size of the silica particle decreases, the tensile strength increases. As particle size decreases, this means more particles in the same weight of silica and more surface area. The more surface area of silica present, the more reinforcement sites are available in the nanocomposite.

Therefore, there remains a need for a method of producing organic/inorganic nanocomposites that will increase the productivity and applicability of nanocomposites without the disadvantages associated with the current methods of nanocomposite preparation, such as the lack of bulk production capability and the agglomeration of the inorganic phase.
WO00/34393 discloses polymer/clay nanocomposites prepared by adding a concentrate comprising a polymer and a clay to a second polymeric resin. Similar subject matter is disclosed in WO00/34377 and WO01/05880.
FR2810987 discloses nanocomposites comprising a matrix polymer. The additives have a mean diameter greater that 0.1 µm.

### Summary of the Invention

According to the present invention, a method for producing an organic-inorganic nanocomposite, comprises extrusion, in a single-screw extruder, of a polymer resin with a concentrate of an organic polymer and a non-clay inorganic additive, in the form of particles less than 100 nm in size, whose surface is chemically modified with organic functional groups which improve compatibility between the additive and the organic polymer.
Preferably, the organic/inorganic concentrate is formed by solution blending, solution polymerisation, intercalation or melt intercalation. More preferably, it is formed by solution blending. Using solution blending, the organic/inorganic concentrate is formed by surface-modifying an inorganic additive to produce a modified additive, mixing the modified additive with an organic polymer solution to produce an organic/inorganic polymer solution, and removing solvent from the organic/inorganic solution to produce the organic/inorganic concentrate. A variety of methods can be utilized to remove the solvent from the organic/inorganic solution, such as solution extrusion, film-casting, and block-casting. In a further embodiment, the inorganic additive is silica. In a specific embodiment, the inorganic additive is silica and the organic polymer is PMMA. In another specific embodiment, the inorganic additive is silica and the organic polymer is polystyrene.

The methods of the subject invention solve the compatibility problem associated with the inorganic phase and the organic phase, minimizing the agglomeration that would otherwise occur during the extrusion process. Processing of organic/inorganic concentrates with polymer resin will significantly increase the productivity and applicability of the nanocomposites produced.

The methods of the subject invention have several advantages over solution blending alone. For example, when extrusion is utilized to process the organic/inorganic concentrate and polymer resin, the polymer chains orient along the extruding line; any extra solvent is eliminated; and silica particles and polymer matrix are packed closer by the external force during extrusion, causing stronger interfacial interactions between them.

Advantageously, the methods of the subject invention can be used to produce homogeneous nanocomposites with high concentrations of additives. The energy needed to disperse the inorganic additives into the polymer matrix is much less than that necessary for direct dispersion of the additives because, using the methods of the subject invention, the additive is wetted with the polymer in concentrates before processing. Because the nano-scale additives are first wetted with polymer in concentrated nanocomposites, the nanocomposites can then easily dissipate into a polymer matrix if more polymer pellets are added during processing. Therefore, using concentrates as a starting material for processing, instead of simply using modified additives, provides a significant advantage over conventional methods. The methods of the subject invention provide productivity that is ideal for the demands of bulk production.

### Brief Description of the Drawings

**Figure 1** shows a schematic illustration of an extrusion method according to the subject invention useful for preparing organic/inorganic nanocomposites.

**Figure 2** shows a schematic illustration of surface modification, when silica is used as an inorganic additive.

**Figure 3** shows the stress-strain relationship of PMMA/AEROSIL 90 nanocomposites from extrusion: a) 1 wt%; b) 3 wt%; c) 5 wt%; d) 10 wt% and e) 13 wt%.

**Figure 4** shows the stress-strain relationship of PMMA/10 wt% silica nanocomposites from extrusion with: a) OX 50; b) OX 80; c) AEROSIL 90 and d) AEROSIL 130.

**Figure 5** shows the tensile strength of PMMA/silica nanocomposites produced by a method of the subject invention, utilizing solution blending and extrusion, as compared to solution blending alone.

**Figure 6** shows the modulus of PMMA/silica nanocomposites produced by a method of the subject invention, utilizing solution blending and extrusion, as compared to solution blending alone.

**Figure 7** shows the tensile strength of PMMA/silica nanocomposites produced by a method of the subject invention, utilizing solution blending and multiple extrusion.

**Figure 8** shows the modulus of PMMA/silica nanocomposites produced by a method of the subject invention, utilizing solution blending and multiple extrusion.

**Figure 9** shows the tensile strength of PMMA/silica nanocomposites produced by a method of the subject invention, utilizing solution blending and extrusion with various types of silica.

**Figure 10** shows the modulus of PMMA/silica nanocomposites produced by a method of the subject invention, utilizing solution blending and extrusion with various types of silica.

**Figure 11** shows thermogravimetric analysis (TGA) of PMMA/AEROSIL 90 nanocomposites from extrusion: a) 1 wt%; b) 3 wt%; c) 5 wt%; d) 10 wt% and e) 13 wt% silica (in order at 10% weight loss).

**Figure 12** shows the effect of particle size on thermal stability of PMMA/5 wt% silica nanocomposites from extrusion: a) OX 50; b) OX 80; c) AEROSIL 90; d) AEROSIL 130 and e) AEROSIL 300 (in order at 10% weight loss).

**Figure 13** shows thermal stabilities of PMMA/silica nanocomposites from multiple runs by extrusion: solid line is 1^{st} run and dashed line is 2^{nd} run.

**Figure 14** shows TGA of polystyrene/AEROSEL 90 nanocomposites from extrusion: a) 1 wt%; b) 3 wt%; c) 5 wt%; d) 10 wt% and e) 13 wt% silica (in order at 10% weight loss).

### Detailed Disclosure of the Invention

The methods of the subject invention utilize organic/inorganic concentrates and polymer resin to prepare organic/inorganic nanocomposites. Specifically, the methods of the subject invention include providing an organic/inorganic concentrate and processing the organic/inorganic concentrate with a polymer resin to form a nanocomposite. The organic/inorganic concentrate and resulting nanocomposite of the subject invention are composed of at least one surface-modified inorganic additive and at least one organic polymer. In one embodiment, the organic/inorganic concentrate is formed by a process selected from the group consisting of solution blending, solution polymerization, intercalation, and melt intercalation. The processing of the organic/inorganic concentrate with the polymer resin is conducted by extrusion, using a single-screw extruder.

In a preferred embodiment, the organic/inorganic concentrate is formed by solution blending. Using solution blending, the organic/inorganic concentrate is formed by surface-modifying an inorganic additive to produce a modified additive, mixing the modified additive with an organic polymer solution to produce an organic/inorganic polymer solution, and removing solvent from the organic/inorganic polymer solution to produce the organic/inorganic concentrate. The solvent can be removed from the organic/inorganic solution using a variety of methods, such as solution extrusion, film-casting, and block-casting. In a further embodiment, the inorganic additive is silica. In a specific embodiment, the inorganic additive is silica and the organic polymer is PMMA. In another specific embodiment, the inorganic additive is silica and the organic polymer is polystyrene.

Advantageously, the methods of the subject invention can be used to produce homogeneous nanocomposites with high concentrations of additives. The energy needed to disperse the inorganic additives into the polymer matrix is much less than that necessary for direct dispersion of the additives because, using the methods of the subject invention, the additive is wetted with the polymer in concentrates before processing. Because the nano-scale additives are first wetted with polymer to form concentrated nanocomposites, the nanocomposite concentrate can then easily dissipate into a polymer matrix if more polymer pellets are added during processing, resulting in homogenously dispersed nanocomposites.

Without being bound by theory, the prior wetting of the particle surface within the nanocomposite concentrates significantly decreases the surface energy of the additive, which makes the dispersion of additives into the polymer possible when the concentrate is extruded with polymer resin. As the particle size decreases, the number of particles will increase in the composites, and the surface area of the particles will increase dramatically. If the wetting of the particles is good, the interfacial interaction between small particles and the polymer matrix will be much stronger than that between large particles and the polymer, because the interface area of a small particle system is much larger than that in a large particle system. In the case of nano-scale additives, the size of the particles approaches that of the segment of a polymer molecular chain. Therefore, the additive-polymer mixture can then be further mixed with polymer molecules. These effects lead to better interfacial interaction between the inorganic phase and organic phase as the particle size decreases.

Therefore, using concentrates as a starting material for processing, instead of simply using modified additives, provides a significant advantage over conventional methods. The methods of the subject invention provide productivity that is ideal for the demands of bulk production.

A variety of inorganic additives known to those skilled in the art can be utilized to practice the methods of the subject invention. Examples of inorganic additives include, but are not limited to, silica, metals, and metal oxides, including but not limited to montmorillonite, Ag, Au, Co, Fe, Pt, Pd, Os, PbS, Pb, calcium carbonate, titanium dioxide (TiO₂), alumina trihydrate, talc, antimony oxide, magnesium hydroxide, bariums sulfate, as well as additives with adsorbed organic molecules, such as surface-modified SiO₂, TiO₂, and kaolin.

The additive(s) used to practice the methods of the subject invention are generally on the nano-scale size range, e.g., less than about 100 nanometers (nm). In one embodiment, the additive is within the size range of about 2 nm and about 90 nm. In another embodiment, the additive is within the size range of about 3 nm and about 60 nm. In a further embodiment, the additive is within the size range of about 5 nm and about 50 nm.

A variety of organic polymers known to those skilled in the art can be used to practice the methods of the subject invention. Examples of organic polymers include, but are not limited to, thermoplastics, such as polyesters, polyethers, such as polyether sulfone, polyolefins, such as polyethylene, ethylene-propylene copolymer, either random or block configuration, polypropylene-maleic acid anhydride, polystyrene, polyurethanes, styrene-acrylonitrile copolymer, acrylonitril-butadiene-styrene, poly(methyl methacrylate), ethylene vinyl acetate, ethylene-acrylic acid copolymer, vinyl chloride propylene, polyisobutylene, polybutadiene, poly(vinyl chloride), polytetrafluoroethylene, and the like.

Such polymers can be used during the formation of organic/inorganic concentrates and/or as the polymer resin during processing of the organic/inorganic concentrate and the polymer resin. The polymers can be used singularly or in combination to produce a polymer blend.

Polymers used in the methods of the subject invention can be cross-linked to a degree appropriate for the particular application. For example, polyisoprene can be lightly cross-linked for flexibility or heavily cross-linked as a permanent thermoset. Reversible cross-links are possible as well. Appropriate cross-linking agents are known to those skilled in the art and can be employed in carrying out the methods of the subject invention.

The primary concern for any organic/inorganic composite is the compatibility between the additives and the polymer matrix. The properties of any resulting materials will be poor if the compatibility is poor. The compatibility of organic/inorganic composites is determined by the solubility parameters of the different phases. The more similar the solubility parameters of the different phases, the better the compatibility. Materials with similar functional groups, polarities, or structures will tend to have similar solubility parameters. Incompatible systems can be converted to compatible systems by modification of one of the phases.

In order to improve compatibility between the additive and the polymer matrix, the additive's surface is modified. A surface modifier will chemically react with the functional groups on the additive's surface, producing functional groups that have similar physical properties as the base polymer(s) that will be used. Therefore, by surface modification, the additive's surface is covered with organic functional groups, which improve compatibility between the inorganic additive and the organic polymer matrix, also known as the interfacial interaction between the additive and the polymer. The interfacial interaction between the additive and the polymer matrix will vary with the surface modifier utilized.

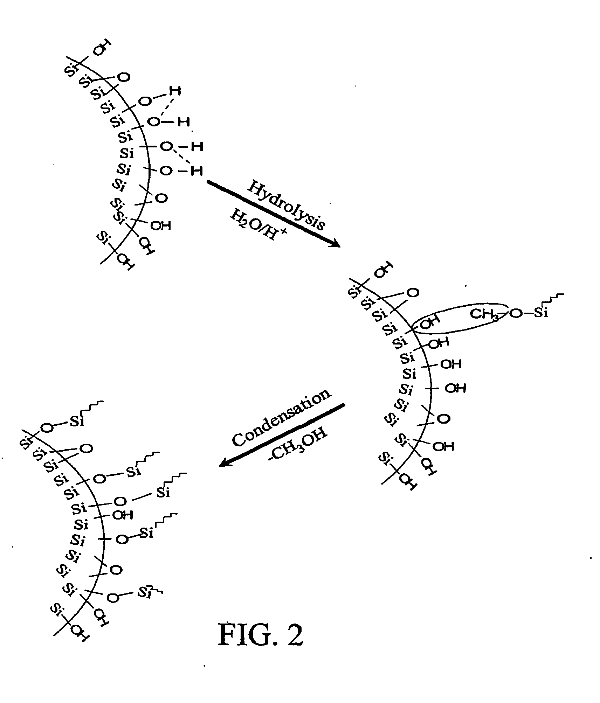

An appropriate surface modifier can be readily determined by those skilled in the art and is generally based on the surface properties of the inorganic phase, polymer phase, and the kind of interfacial interaction desired between the inorganic and organic phases. For example, any methoxysilane that has functionality appropriate for the particular polymer(s) can be used, as long as it is sufficiently separated from the methoxysilane to preclude interaction. Specific examples of modifiers include, but are not limited to, (3-acryloxypropyl)methyldimethoxysilane (APMDMOS) and (3-acryloxypropyl)trimethoxysilane (APTMOS). Figure 2 shows the schematic illustration of surface modification, when silica is used as the inorganic additive.

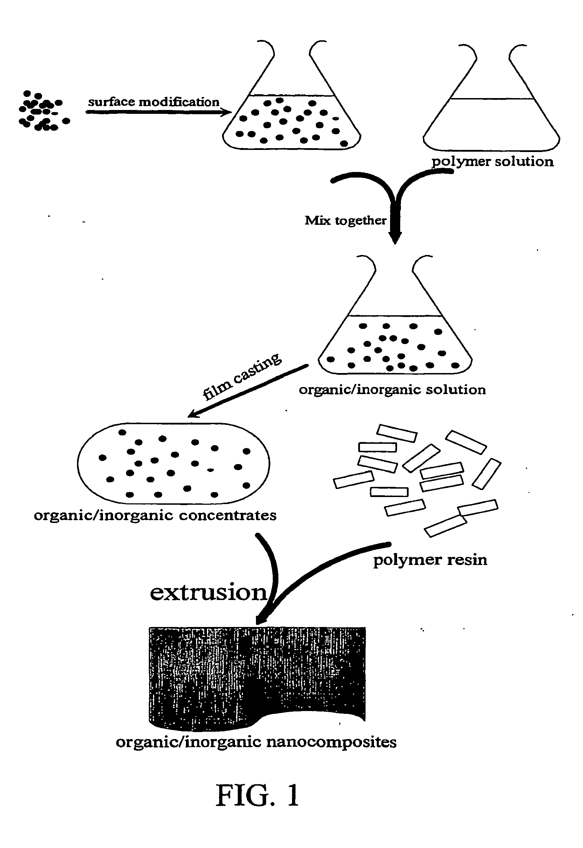

The organic/inorganic concentrates can be prepared by methods known to those skilled in the art. Preferably, the organic/inorganic concentrates are prepared using the solution blending method. The interfacial interaction in materials formed by this method will be physical entanglement instead of chemical bonding, and the strength of the interface will depend on any modification of the inorganic surface. Figure 1 shows the schematic illustration of the solution blending method, followed by film-casting of the organic/inorganic concentrates, and extrusion of the concentrates with polymer resin. As shown in Figure 1, the inorganic additive is combined with an appropriate modifier and solvent in solution and adequately stirred. The polymer is added with a solvent and adequately stirred. Solvents can include THF or ethanol, for example. These two solutions are then combined and adequately stirred. A homogeneous solution will be obtained after blending of the polymer solution and additive solution. The homogeneous solution can then be cast as a film and dried. These nanocomposites represent the organic/inorganic concentrates used in the methods of the subject invention.

Other methods that can be utilized to produce the organic/inorganic concentrates include, but are not limited to, solution blending, solution polymerization, intercalation, and melt intercalation. For example, if solution polymerization is utilized, the surface-modified additive is first dispersed in a monomer solution. The additive-monomer solution is then polymerized to form an organic/inorganic solution for subsequent casting, forming the organic/inorganic concentrate.

The organic/inorganic concentrates and the extruded nanocomposites can comprise about 50% or less inorganic additive, by weight. In one embodiment, the organic/inorganic concentrate or extruded nanocomposite comprises within the range of about 0.1% to about 50% inorganic additive. In another embodiment, the organic/inorganic concentrate or extruded nanocomposite comprises within the range of about 3% to about 40% inorganic additive, by weight. In a further embodiment, the organic/inorganic concentrate or extruded nanocomposite comprises within the range of about 5% to about 30% inorganic additive, by weight. In another embodiment, the organic/inorganic concentrate or extruded nanocomposite comprises within the range of about 7% to about 20% inorganic additive, by weight.

Following formation of the organic/inorganic concentrate, the concentrate is processed with polymer resin. Therefore, it should be understood that the organic/inorganic concentrate will typically comprise a higher percentage of inorganic additive than the processed nanocomposite due to the polymer resin added during processing, unless more additive is added during processing, as well. Polymer resins are typically formulated as pellets and powders. An extruder can be used for processing the organic/inorganic concentrate with the polymer resin. If extrusion is used as the method of processing the organic/inorganic concentrate with the polymer resin, it is preferable that a single screw extruder be utilized, as it is the simplest industrial instrument for the processing of plastics. However, any extrusion process, such as injection molding, can be utilized to process the organic/inorganic concentrate with the polymer resin.

The polymer resin (or resins) selected can be the same or different from the polymer (or polymers) present in the organic/inorganic concentrate. If the polymer resin is different than the polymer in the organic/inorganic concentrate, they are preferably compatible polymers. Where an extruder is utilized, the polymer resin and the organic/inorganic concentrate are co-extruded at the appropriate temperature and screw type. Inorganic particles will dissipate homogeneously in the polymer flow. This is most likely facilitated by the wetting of the particle surfaces in the concentrates, which significantly reduces the surface energy of the additive. Resulting materials show significant improvement of mechanical properties and thermal stability, while degradation of polymers is less likely to occur.

The processing step can be carried out multiple times. For example, if extrusion is utilized during the processing step, the nanocomposite formed by the extrusion of the organic/inorganic concentrate with the polymer resin can be re-extruded one or more additional times by re-extruding the nanocomposite with additional polymer resin.

It should be understood that the terms "extrusion" and "processing" can be used interchangeably throughout the specification and/or claims.

Without being bound by theory, the improved properties of the nanocomposites produced using the methods of the subject invention can also be attributed to the fact that, during extrusion, the polymer chain will orientate along the direction of extrusion. The polymer and additives will be packed more closely, which will lead to stronger interfacial interaction between them. In addition, by using an extrusion step, solvents can be eliminated from the materials. In nanocomposites produced by solution blending, solvents may not be eliminated from the polymers even after years of drying.

Using methods known in the art, the nanocomposites of the subject invention can be applied to, or formulated into, various articles and substrates. The articles and substrates can include a variety of other materials, including, but not limited to, metals, woods, fabrics, concrete, particle board, as well as other polymer materials. The nanocomposites of the subject invention can be formulated as coatings, films, foams, membranes, sheets, blocks, and the like.
The following Examples illustrate procedures for practicing the subject invention. These examples should not be construed as limiting. All percentages are by weight and all solvent mixture proportions are by volume unless otherwise noted.

### Example 1-Surface modification of silica additive for production of PMMA/silica nanocomposites.

Silica modification was carried out in THF with APTMOS as the surface modifier and 0.1 N HCl solution as the hydrolysis reagent. Figure 2 depicts the surface modification of silica. Nano-scale silica was obtained from DEGUSSA Corp. (Dusseldorf, Germany) and surface modifiers were purchased from GELEST, Inc. (Tullytown, PA).

The silica surface is covered with the surface modifier through chemical bonding, which should have similar functional groups pendant outside the silica surface. This kind of modification should offer good compatibility between modified silica and PMMA if they can be homogeneously dispersed into the PMMA matrix. Fumed silica was first dispersed in THF, then 2 mole ratios of APTMOS and 0.1 N of HCl solution were added to the above solution according to the moles of silanol groups on the silica surface. The mixture was subjected to magnetic stirring at room temperature for a 24 hour period before use.

### Example 2-Solution blending of surface modified silica with PMMA solution to produce organic/inorganic concentrates.

The PMMA solution was formed from PMMA pellets dissolved in toluene. The surface modified silica and the PMMA solution were mixed together by mechanical stirring for 24 hours, and the resulting solution was cast into a film and dried for 6 days under atmospheric conditions. Final materials were dried for 1 day at 60 °C under vacuum before testing. Nanocomposites with 5%, 10%, and 15% (by weight) of OX80 type silica were prepared by the methods described in Examples 1 and 2. PMMA/silica concentrates were prepared identically as the nanocomposites, using all five silica types, *i.e.,* AEROSIL OX50, AEROSIL OX80, AEROSIL 90, AEROSIL 130, and AEROSIL 300, which have an average particle size of 40 nm, 30 nm, 20 nm, 16 nm, and 7 nm, respectively. However, the concentrates have 30% silica content (by weight) and were subsequently extruded, as described in Example 3. The resulting concentrates exhibited no visible agglomeration. Figure 1 shows a schematic illustration of an extrusion method according to the subject invention useful for preparing organic/inorganic nanocomposites.

### Example 3-Co-extrusion of PMMA pellets with organic/inorganic concentrates to form PMMA/silica nanocomposites.

PMMA/silica nanocomposites were obtained by co-extruding PMMA pellets and concentrates formed by solution blending. CP-61 PMMA resin was obtained in the form of pellets (ICI ACRYLICS, Inc., Memphis, TN). A 3/4" Table Top Independent Extruder was used to form the PMMA/silica nanocomposites. Concentrates and PMMA pellets were pre-dried under vacuum at 100°C for one day to eliminate moisture and extra solvent in these materials. The temperatures of the four heating zones of the extruder were 210°C, 215°C, 220°C, and 220°C respectively, and a 2" ribbon die was used at the orifice of the extruder.

PMMA/silica concentrates and PMMA pellets were co-extruded and the final materials were subjected to property testing. The weight ratio of the concentrates and PMMA was determined by the silica content dispersed in the final material. The PMMA/silica nanocomposites prepared by extrusion show no agglomeration and the materials were transparent with no color, which suggests the homogenous dissipation of silica in the PMMA matrix. OX 80 type PMMA/silica nanocomposites were subjected to re-extrusion with the same extrusion conditions described above to evaluate the processibility of these nanocomposites.

### Example 4-Evaluation of the mechanical properties, thermal stability, and flammability of PMMA/silica nanocomposites.

The PMMA/silica nanocomposites were prepared successfully by using the method of the subject invention. All nanocomposites produced using the method of the subject invention exhibited substantially better mechanical performance and thermal stability than those nanocomposites produced by solution blending alone.

The silica concentration can affect the quality of the final nanocomposites. Agglomeration will occur if the silica content goes beyond a certain weight percentage in the nanocomposite. For example, homogenously dispersed PMMA/silica nano-composites were prepared by extrusion without agglomeration if the concentration of silica was below 13% (by weight) for PMMA in the AEROSIL 90 system. Beyond this percentage, serious agglomeration occurred and visible white silica particles could be seen.

The particle size of silica also affects the quality of the extrusion samples. In general, with decreasing particle size, the maximum concentration of silica that could be loaded into the PMMA matrix during extrusion without agglomeration decreases. If AEROSIL 300 silica is used, the maximum loading of silica in the final material is up to 6% (by weight) without agglomeration, while the maximum loading can be up to 13% (by weight) if AEROSIL 90 silica is used.

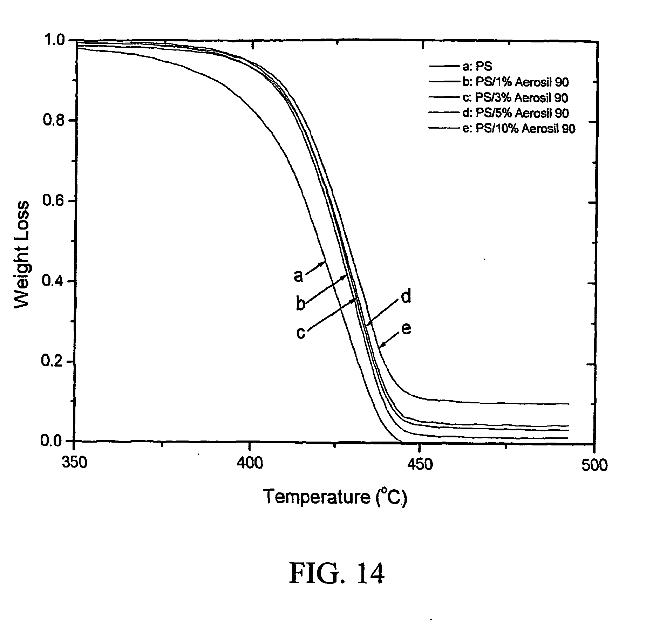

The sample code system utilized in the Figures and Tables can be explained by the following example: PMMA-130-5. The second element is the silica type (if present), where "50" is OX50; "80" is OX80; "90" is AEROSIL 90; "130" is AEROSIL 130; and "300" is AEROSIL 300. The third element is the percent concentration (by weight) of silica in the whole material. If sample is made by a different approach, other than extrusion, additional note will be added to the end of the code. The organic polymer utilized to produce all nanocomposites in Examples 1-4 and accompanying Figures 1-13 was PMMA. The polymer utilized to produce the nanocomposites in Example 5 and accompanying Figure 14 was polystyrene (PS).

Mechanical properties are one of the most important characteristics for polymeric materials. The effects of silica content and particle size on the mechanical performance of prepared nanocomposites are presented. The mechanical properties, thermal stabilities and relaxation behaviors of the resulting materials are discussed in terms of the silica content and particle size effects.

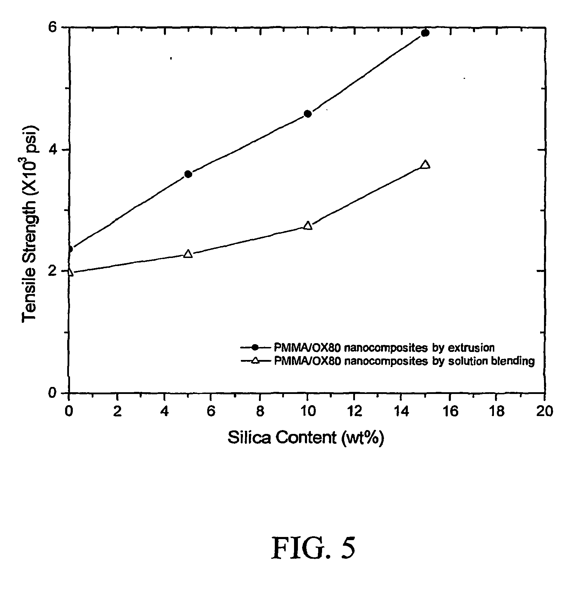

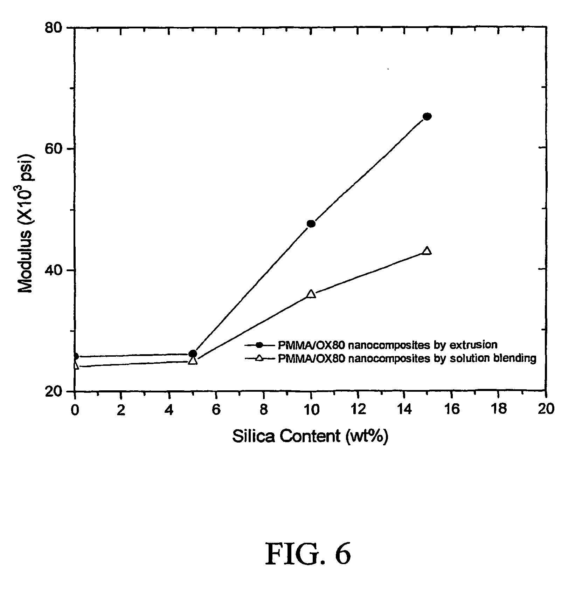

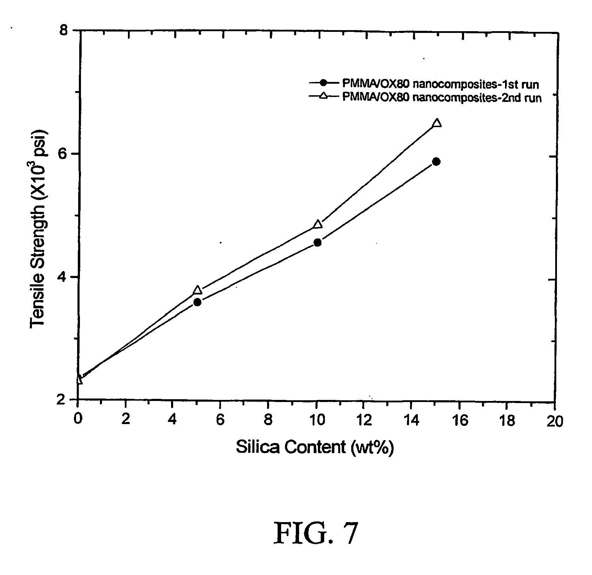

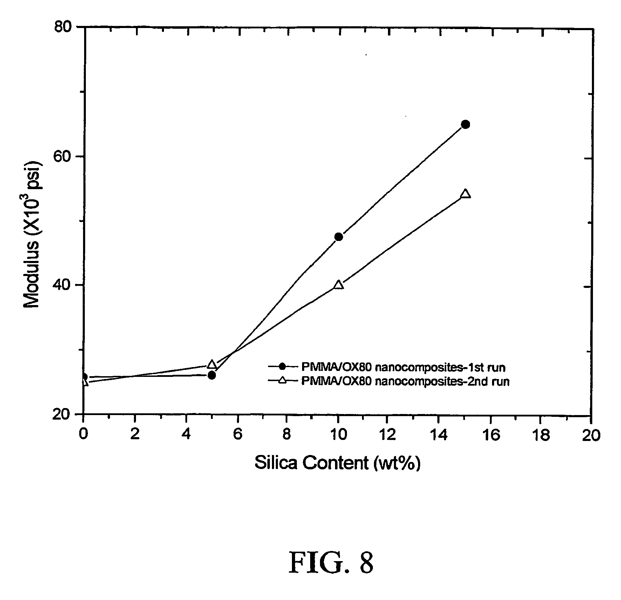

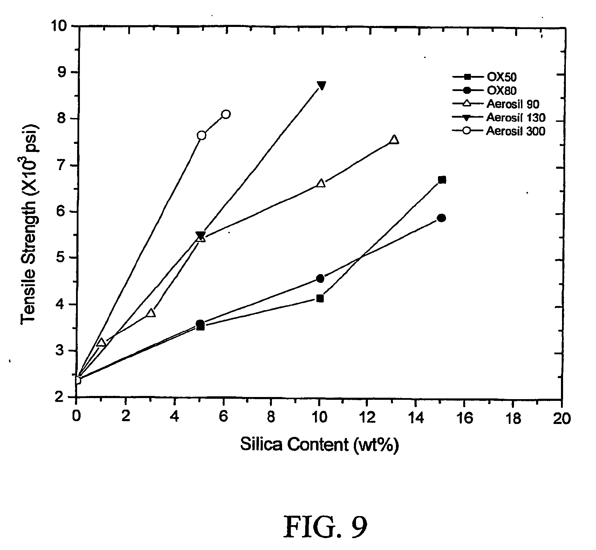

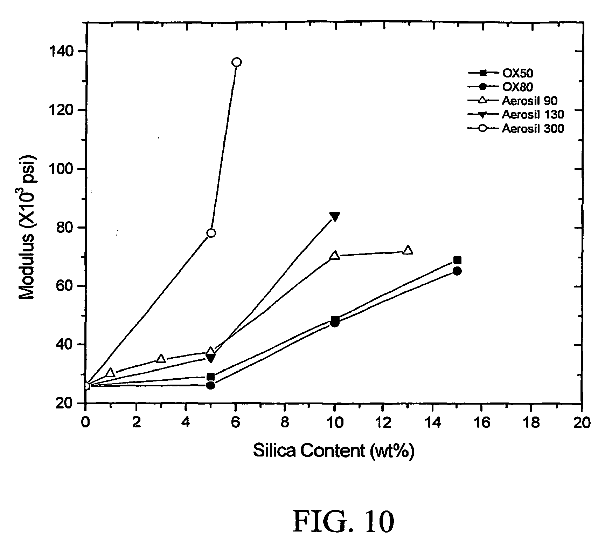

A Tinius Olsen Series 1000 UTM tensile tester with an analog graphic recorder was used to test tensile strength, modulus, and elongation at break for all the materials produced from solution blending alone and from methods of the subject invention, according to the ASTM 638-95 standard. The testing rate was 0.05 inch/min. Figure 5 shows the tensile strength of PMMA/silica nanocomposites produced by a method of the subject invention, utilizing extrusion, as compared to solution blending alone. Figure 6 shows the modulus strength of PMMA/silica nanocomposites produced by a method of the subject invention, utilizing extrusion, as compared to solution blending. Figure 7 shows the tensile strength of PMMA/silica nanocomposites produced by methods of the subject invention, following one run of extrusion and two runs of extrusion. Figure 8 shows the modulus of PMMA/silica nanocomposites produced by a method of the subject invention, following one run of extrusion and two runs of extrusion. Figure 9 shows the tensile strength of PMMA/silica nanocomposites produced by a method of the subject invention, utilizing extrusion, with various types of silica. Figure 10 shows the modulus of PMMA/silica nanocomposites produced by a method of the subject invention, utilizing extrusion, with various types of silica.

Table 1 shows a comparison of the mechanical properties of PM1VIA/silica nanocomposites produced by a method of the subject invention, utilizing extrusion, with various types and concentrations of silica.

**Table 1. Mechanical properties of PMMA/silica nanocomposites from extrusion**

| **Sample Code*** | **Tensile Strength (x10³ psi)** | **Modulus (x10³ psi)** | **Elongation at Break (%)** |
|---|---|---|---|
| PMMA | 2.36 | 25.8 | 8.12 |
| PMMA-50-5 | 3.53 | 29.1 | 11.91 |
| PMMA-50-10 | 4.16 | 48.7 | 10.37 |
| PMMA-50-15 | 6.73 | 69.0 | 11.06 |
| PMMA-80-5 | 3.60 | 26.1 | 12.94 |
| PMMA-80-10 | 4.58 | 47.6 | 11.76 |
| PMMA-80-15 | 5.90 | 65.1 | 12.39 |
| PMMA-90-1 | 3.16 | 30.1 | 13.11 |
| PMMA-90-3 | 3.80 | 34.8 | 13.68 |
| PMMA-90-5. | 5.42 | 37.4 | 16.85 |
| PMMA-90-10 | 6.61 | 70.1 | 18.39 |
| PMMA-90-13 | 7.57 | 71.9 | 21.23 |
| PMMA-130-5 | 5.51 | 35.5 | 9.51 |
| PMMA-130-10 | 8.75 | 84.1 | 8.91 |
| PMMA-300-5 | 7.65 | 78.1 | 17.31 |
| PMMA-300-6 | 8.10 | 136.3 | 20.21 |

| | | | |
|---|---|---|---|
| * The code system can be explained by the following example: PMMA-130-10. The first element is the polymer matrix (an organic polymer), which is PMMA in this case. The second element is the silica type, and the third element is the concentration of silica in the whole material. | | | |

Table 2 shows the mechanical properties of PMMA/siIica nanocomposites produced by a method of the subject invention, utilizing extrusion, as compared to solution blending alone, with various concentrations of silica. Averages of five tests are shown. A Cannon-Fenske capillary viscometer was used to measure the viscosity of PMMA, and the viscosity-average molecular weight of PMMA was determined by the equation [η]=KM_{ν}^{α} that was developed by Mark, Houwink, and Sakurada. K and α are 0.55×10⁻⁴ and 0.76, respectively, when benzene is used as the solvent. The viscosity-average molecular weight of the commercial PMMA resin that was used in this part was 890,000.

**Table 2.**

| **Sample Code** | **Tensile Strength (x10³ psi)** | | **Modulus (x10³ psi)** | **Elongation at Break (%)** |
|---|---|---|---|---|
| | Extrusion | | | |
| PMMA | 2.36 ± 0.1 | | 25.8 ± 0.2 | 8.10 ± 0.7 |
| PMMA-80-5 | 3.60 ± 0.2 | | 26.1 ± 1.1 | 12.9 ± 0.5 |
| PMMA-80-10 | 4.58 ± 0.1 | | 47.6 ± 0.9 | 11.8 ± 0.3 |
| PMMA-80-15 | 5.89 ± 0.1 | | 65.1 ± 2.1 | 12.4 ± 0.3 |

| Solution Blending | | | | |
|---|---|---|---|---|
| PMMA-SB | 1.97 ± 0.1 | | 24.1 ± 0.5 | 5.32 ± 0.2 |
| PMMA-80-5-SB | 2.27 ± 0.2 | | 24.9 ± 0.4 | 6.21 ± 0.3 |
| PMMA-80-10-SB | 2.74 ± 0.1 | | 35.9 ± 0.7 | 5.81 ± 0.2 |
| PMMA-80-15-SB | 3.75 ± 0.1 | | 42.9 ± 0.4 | 7.04 ± 0.6 |

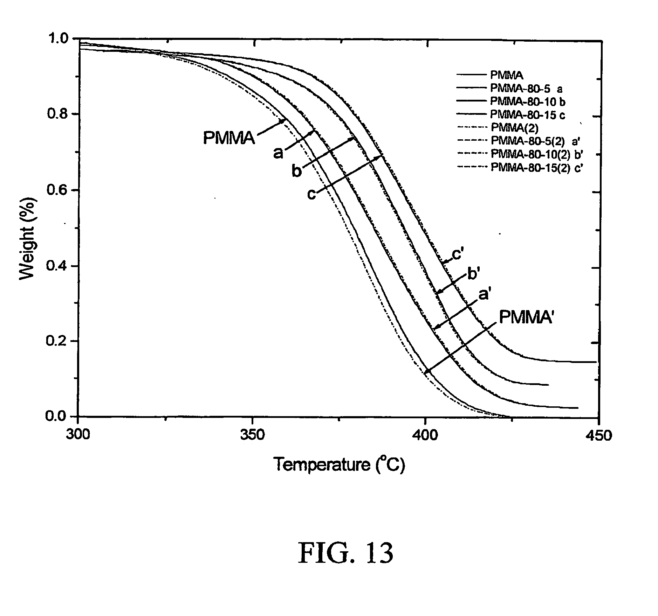

As reported by Rick D. Davis *et al.* (Davis, R. et al. [2002] The 11th International Conference, ADDITIVES), polyamide 6 montmorillonite nanocomposites prepared by *in-situ* polymerization significantly degraded when subjected to traditional injection molding conditions. It is well known that injection molding is the most widely used processing method for thermoplastics, and resins that degrade during this process are very unlikely to be suitable for industrial production. In order to determine the processibility of the nanocomposites prepared by the extrusion technique, PMMA/OX 80 nanocomposites were subjected to a re-extrusion process, and mechanical and TGA testing performed on the resulting materials. In Table 3 and Figure 13, the mechanical properties and thermal stabilities of PMMA/OX 80 nanocomposites with multiple runs are listed, and the results show no change in thermal stability and a slight increase in mechanical properties like tensile strength and modulus, which suggests that the re-extrusion of the nanocomposites will not deteriorate the physical properties of nanocomposites, under conditions where PMMA itself undergoes degradation.

**Table 3. Comparison of mechanical properties of PMMA/silica nanocomposites from multiple extrusion.**

| **Sample Code** | **Tensile Strength (×10³ psi)** | **Modulus (×10³ psi)** | **Elongation at Break (%)** |
|---|---|---|---|
| PMMA | 2.36 | 25.8 | 8.12 |
| PMMA-80-5 | 3.60 | 26.1 | 12.9 |
| PMMA-80-10 | 4.58 | 47.6 | 11.8 |
| PMMA-80-15 | 5.89 | 65.1 | 12.4 |
| PMMA (2) | 2.30 | 24.9 | 9.10 |
| PMMA-80-5 (2) | 3.78 | 27.6 | 11.7 |
| PMMA-80-10 (2) | 4.86 | 40.0 | 12.4 |
| PMMA-80-15 (2) | 6.52 | 54.2 | 10.7 |
| PMMA (3) | 1.98 | 16.9 | 14.5 |
| PMMA-80-5 (3) | 3.75 | 28.1 | 12.2 |
| PMMA-80-10 (3) | 4.80 | 40.0 | 12.8 |
| PMMA-80-15 (3) | 6.61 | 53.5 | 11.3 |
| PMMA (4) | --- | --- | --- |
| PMMA-80-5(4) | 3.22 | 24.6 | 12.0 |
| PMMA-80-10 (4) | 4.51 | 35.7 | 11.4 |
| PMMA-80-15(4) | 6.62 | 54.5 | 12.3 |

All nanocomposites exhibited better mechanical performance, including tensile strength, modulus, and elongation at break, while the reinforcement of mechanical properties showed consistent trends with silica content and particle size.

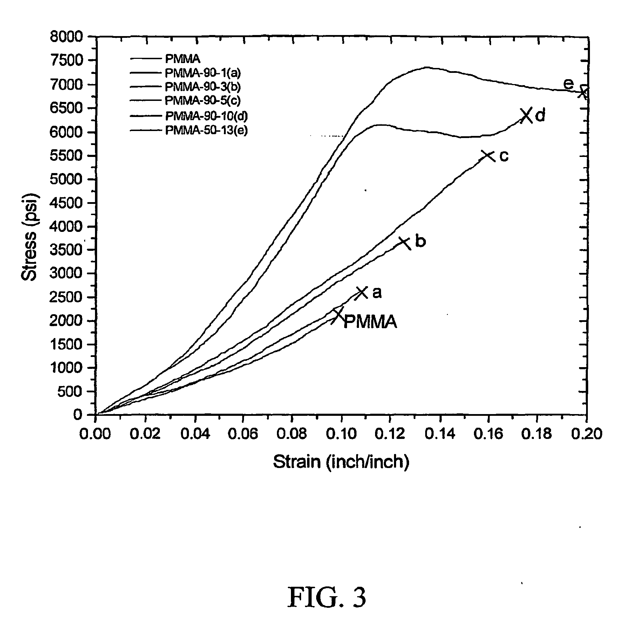

The improvement of mechanical properties suggests a strong interfacial interaction between the organic phase and the inorganic phase, with silica serving as reinforcement sites instead of mechanical failure sites. Based on this point, it is not surprising to see increased mechanical performance for higher concentration nanocomposites because more reinforcement sites will be present. However, with only 1 wt% silica added in the nanocomposite, the tensile strength is improved by 30%, which is remarkable for organic/inorganic composites since the same phenomena cannot be found when macro-size additives were used. The stress-strain relationship illustrated in Figure 3 suggests that PMMA is a very brittle material, while the toughness of PMMA/silica nanocomposites increases with the silica content in the materials. This is the contribution of the soft interface between silica and PMMA when a flexible surface modifier is used.

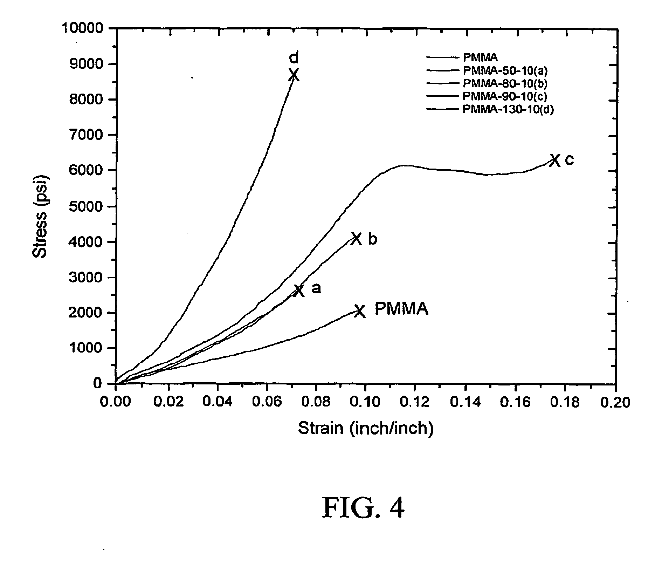

Moreover, when the particle size of the additive decreases, the mechanical properties of the materials become better as indicated in Table 1 and Figure 4. Smaller particle size means the size will approach the size of the polymer molecule, and there is greater probability of significant polymer segment particle interaction. Therefore, extra interfacial interaction between additives and polymer matrix will be expected, and it will not be the case for micron-scale additives.

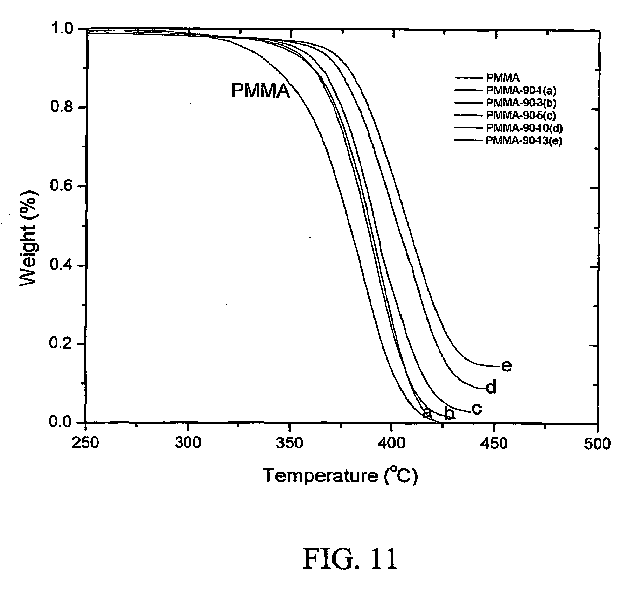

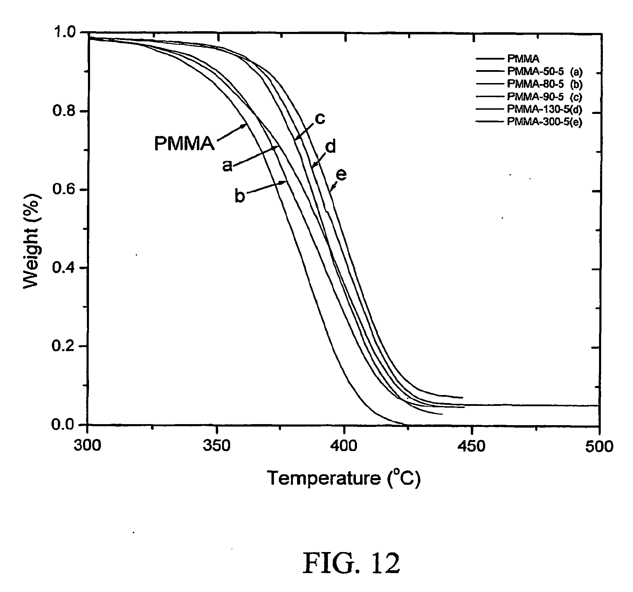

All the materials were tested with a Hi-Res TGA 2950 thermogravimetric analyzer to evaluate thermal stability. Materials were preheated to 100°C and held for 5 minutes to eliminate the solvent and moisture in the sample before testing. The temperature ramp rate was 20°C/min and temperature scan range was 100~550°C under nitrogen. Oxygen Index (OI) tests were performed on all samples according to ASTM D2863 to evaluate the flammability of PMMA/silica nanocomposites. A Horizontal Burning Test also was conducted to investigate the burning flame spread rate of the nanocomposites according to ASTM D635-81. Figure 11 shows the TGA of PMMA/AEROSIL 90 nanocomposites. Figure 12 shows the effect of particle size on thermal stability of PMMA/5 wt% silica nanocomposites. Figure 13 shows thermal stabilities of PMMA/silica nanocomposites from multiple runs by extrusion.

Table 4 shows the thermal stability of PMMA/silica nanocomposites produced by a method of the subject invention, utilizing extrusion, with various types and concentrations of silica.

**Table 4. Thermal stability of PMMA/silica nanocomposites from extrusion.**

| **Sample** | **Temperature at 10% Weight Loss (°C)** | **Temperature at 50% Weight Loss (°C)** |
|---|---|---|
| PMMA | 343.1 | 379.3 |
| PMMA-50-5 | 347.3 | 390.7 |
| PMMA-50-10 | 358.2 | 398.0 |
| PMMA-50-15 | 365.6 | 401.4 |
| PMMA-80-5 | 350.4 | 385.1 |
| PMMA-80-10 | 358.9 | 393.9 |
| PMMA-80-15 | 366.9 | 411.0 |
| PMMA-90-1 | 360.3 | 389.1 |
| PMMA-90-3 | 360.9 | 387.6 |
| PMMA-90-5 | 364.3 | 391.7 |
| PMMA-90-10 | 373.1 | 402.6 |
| PMMA-90-13 | 378.1 | 408.2 |
| PMMA-130-5 | 368.8 | 397.0 |
| PMMA-130-10 | 363.2 | 396.7 |
| PMMA-300-5 | 369.7 | 399.1 |
| PMMA-300-6 | 373.3 | 402.7 |

Oxygen index is a common test used for evaluation of the ease of extinction of plastics. The minimum percentage of oxygen in an oxygen/nitrogen mixture to just sustain the combustion of a top ignited specimen is measured. It is a general method to evaluate the flammability of plastics. Table 5 lists the oxygen indices of PMMA/silica nanocomposites via single extrusion technique. Oxygen indices of nanocomposites show some improvement unlike filled materials in general. An oxygen index of 24-25 was not achieved. Below this number, materials are easy ignited, and not easy extinguished once ignited.

The horizontal burning test is a test to evaluate the fire spread rate of small specimens. It will give fire travel information on the horizontal surface including fire-spread rate, burning behavior and ease of extinction if the material bums without dripping. The nanocomposites listed on Table 5 are not ignition-resistant materials. They all exhibit substantially higher burning rates and lower average times of burning compared to PMMA. In another words, they burn faster. However, all the nanocomposites burn without dripping, which is very different with PMMA, which drips badly during the test. The phenomenon can be explained by the "Wick effect". For some organic/inorganic composites, fire will burn out the organic phase and leave the inorganic phase intact, which will lead to a faster burning rate of the composite.

**Table 5. Flammability of PMMA/silica nanocomposites from extrusion.**

| **Sample Code** | **Oxygen Index** | **Average Burning rate (cm/min)^{a}** |
|---|---|---|
| PMMA | 17.5 | 4.70 |
| PMMA-50-5 | 19.8 | 7.34 |
| PMMA-50-10 | 21.2 | 7.72 |
| PMMA-50-15 | 21.2 | 8.05 |
| PMMA-80-5 | 18.9 | 6.97 |
| PMMA-80-10 | 21.2 | 6.70 |
| PMMA-80-15 | 22.1 | 7.72 |
| PMMA-90-1 | 17.5 | 6.88 |
| PMMA-90-3 | 19.8 | 7.35 |
| PMMA-90-5 | 21.2 | 7.22 |
| PMMA-90-10 | 22.1 | 8.43 |
| PMMA-90-13 | 22.1 | 8.89 |
| PMMA-130-5 | 22.1 | 7.77 |
| PMMA-130-10 | 22.9 | 8.39 |
| PMMA-300-5 | 22.1 | 6.92 |
| PMMA-300-6 | 22.1 | 6.62 |

| | | |
|---|---|---|
| ^{a} Burning rate = 450/(t-t₁), where t₁ is the burning time from the beginning to 25 mm, and t is the burning time from the beginning to 100 mm for horizontal burning test. | | |

The degradation of polymer material involves the scission of long polymer chains into short ones. When a good interfacial interaction is present in an organic/inorganic composite, the inorganic phase acts as restriction sites for the movement of the polymer chain; so they will make the scission of polymer chains harder at lower temperature and move the degradation temperature of the material to higher temperatures. In Table 4, all nanocomposites showed higher degradation temperatures than PMMA itself as expected, while an increase in degradation temperature with increasing silica content and decreasing particle size was also found. This trend is true for both temperatures at 10% and 50% weight loss.

Figures 11 and 12 provide a close look at the TGA results for PMMA/silica nanocomposites in terms of silica content and particle size. As mentioned before, with the decrease of silica particle size, the thermal stability of PMMA/silica nanocomposites increases. Consider the fact that there are more particles per weight for smaller size silica than bigger size silica. This will offer more restriction sites for the polymer chain, the scission of the polymer chain will become more difficult, and therefore move the first step of decomposition of PMMA to higher temperatures. Moreover, the better interfacial interaction between additives and polymer chain introduced by the deeper penetration of smaller particles in the polymer matrix will also restrict the movement of polymer chains.

### Example 5-Evaluation of thermal stability and flammability of polystyrene/silica nanocomposites.

Polystyrene/silica nanocomposites were prepared as described with respect to PMMA/silica nanocomposites. However, the zone temperatures of the extruder were 220° C, 240°C, 260°C, and 260°C. Thermal stabilities and flammabilities of these materials were investigated by TGA, Oxygen Index, and the Horizontal Burning Test, as shown in Figure 14 and Table 6.

**Table 6. Flammability of polystyrene/silica nanocomposites from extrusion.**

| **Sample Code** | **Oxygen Index** | **Average Burning rate (cm/min)** |
|---|---|---|
| Polystyrene | 17.3 | 5.4 |
| PS-90-1 | 17.0 | 5.7 |
| PS-90-3 | 17.3 | 5.8 |
| PS-90-5 | 17.5 | 6.1 |
| PS-90-10 | 18.1 | 7.3 |
| PS-90-15 | 18.4 | --- |

All materials showed a higher degradation temperature compared with the virgin materials and an increased degradation temperature was found with increasing silica content in the polystyrene matrix. This result is similar to the trends found in PMMA/silica nanocomposites, which suggests that the explanation made previously can be used successfully for the discussion of thermal stability of nanocomposites by extrusion. Rather than a 25° C range in improvement in thermal stability in PMMA/silica, it is only a 5° C range for polystyrene/silica.

The oxygen indices and burning rates of the resulting polystyrene/silica nanocomposites also showed similar trends to PMMA/silica nanocomposites. Again, the effects in polystyrene/silica are not as pronounced as for PMMA/silica.

## Claims

1. A method for producing an organic-inorganic nanocomposite, comprising extrusion, in a single-screw extruder, of a polymer resin with a concentrate of an organic polymer and a non-clay inorganic additive, in the form of particles less than 100 nm in size, whose surface is chemically modified with organic functional groups which improve compatibility between the additive and the organic polymer.

2. The method according to claim 1, wherein said organic polymer is selected from polyester, polyether, polyolefin, polystyrene, polyurethane, styrene-acrylonitrile copolymer, acrylonitrile-butadiene-styrene copolymer, polymethyl methacrylate, ethylene-vinyl acetate copolymer, ethylene-acrylic acid copolymer, vinyl chloride-propylene copolymer, polyisobutylene, polybutadiene, polyvinyl chloride and polytetrafluoroethylene.

3. The method according to claim 1 or claim 2, wherein said polymer resin is an organic polymer as defined in claim 2.

4. The method according to claim 1 or claim 2, wherein said organic polymer and said polymer resin are the same.

5. The method according to any preceding claim, wherein said inorganic additive is selected from silica, metals and metal oxides.

6. The method according to any of claims 1 to 4, wherein said inorganic additive is selected from, silver, gold, cobalt, iron, platinum, palladium, osmium, lead, lead sulfide, calcium carbonate, titanium dioxide, alumina trihydrate, talc, antimony oxide, magnesium hydroxide and barium sulfate.

7. The method according to claim 1, wherein said inorganic additive is silicon dioxide or titanium dioxide.

8. The method according to claim 1, wherein said organic polymer is polymethyl methacrylate and said inorganic additive is silica.

9. The method according to claim 1, wherein said organic polymer is polystyrene and said inorganic additive is silica.

10. The method according to any preceding claim, wherein the concentrate comprises 50% or less by weight of the inorganic additive.

11. The method according to any preceding claim, wherein the nanocomposite is a formulation selected from a coating, film, foam, membrane, sheet and block.

12. The method according to any preceding claim, wherein the extruded organic-inorganic nanocomposite is re-extruded one or more times.

13. The method according to any preceding claim, which additionally comprises preparing said concentrate by solution blending or solution polymerisation.

14. The method according to any preceding claim, which additionally comprises preparing said concentrate by surface-modifying an inorganic additive to produce a surface-modified additive, and mixing the surface-modified additive with an organic polymer solution to produce an organic-inorganic polymer solution, and removing solvent from the organic-inorganic polymer solution.

15. The method according to claim 14, wherein the surface-modifying comprises reacting a surface-modifier with the inorganic additive.

16. The method according to claim 15, wherein the surface-modifier is (3-acryloxypropyl)methyldimethoxysilane or (3-acryloxypropyl)trimethoxysilane.

17. The method according to any of claims 14 to 16, wherein the solvent is removed by solution extrusion, film-casting or block-casting.

## Patentansprüche

1. Verfahren zur Herstellung eines organisch-anorganischen Nanokomposits, das Extrudieren in einem Einschneckenextruder umfassend, aus einem Polymerharz mit einem Konzentrat von einem organischen Polymer und einem anorganischen Nicht-Ton-Additiv in Form von Teilchen einer Größe von weniger als 100 nm, deren Oberfläche mit organischen funktionellen Gruppen chemisch modifiziert ist, die die Kompatibilität zwischen dem Additiv und dem organischen Polymer verbessern.

2. Verfahren nach Anspruch 1, wobei das organische Polymer aus Polyester, Polyether, Polyolefin, Polystyrol, Polyurethan, Styrol-Acrylnitril-Copolymer, Acrylnitril-Butadien-Styrol-Polymer, Polymethylmethacrylat, Ethylen-Vinylacetat-Copolymer, EthylenAcrylsäure-Copolymer, Vinylchlorid-Propylen-Copolymer, Polyisobutylen, Polybutadien, Polyvinylchlorid und Polytetrafluorethylen ausgewählt wird.

3. Verfahren nach Anspruch 1 oder Anspruch 2, wobei das Polymerharz ein organisches Polymer, wie in Anspruch 2 definiert, ist.

4. Verfahren nach Anspruch 1 oder Anspruch 2, wobei das organische Polymer und das Polymerharz gleich sind.

5. Verfahren nach irgendeinem vorhergehenden Anspruch, wobei das anorganische Additiv aus Siliciumdioxid, Metallen und Metalloxiden ausgewählt wird.

6. Verfahren nach irgendeinem der Ansprüche 1 bis 4, wobei das anorganische Additiv aus Silber, Gold, Cobalt, Eisen, Platin, Palladium, Osmium, Blei, Bleisulfid, Calciumcarbonat, Titandioxid, Aluminiumoxidtrihydrat, Talkum, Antimonoxid, Magnesiumhydroxid und Bariumsulfat ausgewählt wird.

7. Verfahren nach Anspruch 1, wobei das anorganische Additiv Siliciumdioxid oder Titandioxid ist.

8. Verfahren nach Anspruch 1, wobei das organische Polymer Polymethylmethacrylat und das anorganische Additiv Siliciumdioxid ist.

9. Verfahren nach Anspruch 1, wobei das organische Polymer Polystyrol ist und an anorganische Additiv Siliciumdioxid ist.

10. Verfahren nach irgendeinem vorhergehenden Anspruch, bei dem das Konzentrat 50 Gew.-% oder weniger des anorganischen Additivs enthält.

11. Verfahren nach irgendeinem vorhergehenden Anspruch, bei dem das Nanokomposit eine Formulierung ausgewählt aus einer Beschichtung, einer Folie, einem Schaum, einer Membran, einer Platte und eines Blocks ist.

12. Verfahren nach irgendeinem vorhergehenden Anspruch, bei dem das extrudierte organisch-anorganische Nanokomposit einmal oder mehrere Male erneut extrudiert wird.

13. Verfahren nach irgendeinem vorhergehenden Anspruch, welches zusätzlich die Herstellung des Konzentrats durch Lösungsmischung oder Lösungspolymerisation umfasst.

14. Verfahren nach irgendeinem vorhergehenden Anspruch, welches zusätzlich die Herstellung des Konzentrats durch Oberflächenmodifizieren eines anorganischen Additivs zur Herstellung eines oberflächenmodifizierten Additivs und das Mischen des oberflächenmodifizierten Additivs mit einer organischen Polymerlösung zur Herstellung einer organisch-anorganischen Polymerlösung und das Entfernen des Lösungsmittels aus der organisch-anorganischen Polymerlösung umfasst.

15. Verfahren nach Anspruch 14, bei dem die Oberflächenmodifizierung das Reagieren eines Oberflächenmodifizierungsmittels mit dem anorganischen Additiv umfasst.

16. Verfahren nach Anspruch 15, bei dem das Oberflächenmodifizierungsmittel (3-Acryloxypropyl)methyldimethoxysilan oder (3-Acryloxypropyl)trimethoxysilan ist.

17. Verfahren nach irgendeinem der Ansprüche 14 bis 16, bei dem das Lösungsmittel durch Lösungsextrusion, Filmgießen oder Blockgießen entfernt wird.

## Revendications

1. Procédé pour la production d'un nanocomposite organique-inorganique, comprenant l'extrusion, dans une extrudeuse à une seule vis, d'une résine polymère avec un concentré d'un polymère organique et d'un additif inorganique ne consistant pas en une argile, sous forme de particules ayant des dimensions inférieures à 100 nm, dont la surface est chimiquement modifiée avec des groupes fonctionnels améliorant la compatibilité entre l'additif et le polymère organique.

2. Procédé selon la revendication 1, dans lequel ledit polymère organique est choisi parmi un polyester, un polyéther, une polyoléfine, un polystyrène, un polyuréthane, un copolymère styrène-acrylonitrile, un copolymère acrylonitrile-butadiène-styrène, un poly(méthacrylate de méthyle), un copolymère éthylène-acétate de vinyle, un copolymère éthylène-acide acrylique, un copolymère de chlorure de vinyle-propylène, un polyisobutylène, un polybutadiène, un poly(chlorure de vinyle) et un polytétrafluoroéthylène.

3. Procédé selon la revendication 1 ou la revendication 2, dans lequel ladite résine polymère est un polymère organique tel que défini dans la revendication 2.

4. Procédé selon la revendication 1 ou la revendication 2, dans lequel ledit polymère organique et ladite résine polymère sont identiques.

5. Procédé selon l'une quelconque des revendications précédentes, dans lequel ledit additif inorganique est choisi parmi la silice, des métaux et des oxydes métalliques.

6. Procédé selon l'une quelconque des revendications 1 à 4, dans lequel l'additif inorganique est choisi parmi l'argent, l'or, le cobalt, le fer, le platine, le palladium, l'osmium, le plomb, le sulfure de plomb, le carbonate de calcium, le dioxyde de titane, le trihydrate d'alumine, le talc, l'oxyde d'antimoine, l'hydroxyde de magnésium et le sulfate de baryum.

7. Procédé selon la revendication 1, dans lequel l'additif inorganique est le dioxyde de silicium ou le dioxyde de titane.

8. Procédé selon la revendication 1, dans lequel ledit polymère organique est le poly(méthacrylate de méthyle) et ledit additif inorganique est la silice.

9. Procédé selon la revendication 1, dans lequel ledit polymère organique est le polystyrène et ledit additif inorganique est la silice.

10. Procédé selon la revendication 1, dans lequel le concentré comprend 50 % ou moins en poids de l'additif inorganique.

11. Procédé selon l'une quelconque des revendications précédentes, dans lequel le nanocomposite est une formulation choisie parmi un revêtement, un film, une mousse, une membrane, une feuille et un bloc.

12. Composé selon l'une quelconque des revendications précédentes, dans lequel le nanocomposite organique-inorganique extrudé est réextrudé une ou plusieurs fois.

13. Procédé selon l'une quelconque des revendications précédentes, qui comprend en outre la préparation dudit concentré par mélange en solution ou polymérisation en solution.

14. Procédé selon l'une quelconque des revendications précédentes, qui comprend en outre la préparation dudit concentré par modification de surface d'un additif inorganique pour produire un additif modifié en surface, et mélange de l'additif modifié en surface avec une solution d'un polymère organique pour produire une solution de polymère organique-inorganique et élimination du solvant dans la solution de polymère organique-inorganique.

15. Procédé selon la revendication 14, dans lequel la modification de surface comprend la réaction d'un modificateur de surface avec l'additif inorganique.

16. Procédé selon la revendication 15, dans lequel le modificateur de surface est le (3-acryloxypropyl)méthyldiméthoxylane ou le (3-acryloxypropyl)triméthoxysilane.

17. Procédé selon l'une quelconque des revendications 14 à 16, dans lequel le solvant est éliminé par extrusion en solution, coulée en film ou coulée en bloc.
